# EUROPÄISCHE PATENTSCHRIFT

(11) **EP 0 531 679 B1**
(45) Veröffentlichungstag und Bekanntmachung des Hinweises auf die Patenterteilung: **28.06.1995**
(21) Anmeldenummer: 92112531.6
(22) Anmeldetag: 22.07.1992
(51) Int. Cl.: B25F 1/00, B60R 22/32

(54) **Trennvorrichtung mit Messerklinge, Hammerspitze und Halterung**
Separation device with knife blade, hammes-point and holder
Dispositif de séparation avec lame de couteau, tête de frappe à pointe et support

(30) Priorität: 11.09.1991 DE 4130069
(43) Veröffentlichungstag der Anmeldung: 17.03.1993
(73) Patentinhaber: MARTOR-ARGENTAX E.H. Beermann KG, D-42648 Solingen (DE)
(72) Erfinder: Beermann, Ewald Helmut, W-5650 Solingen (DE)
(74) Vertreter: Patentanwälte Ostriga & Sonnet

(56) Entgegenhaltungen:
- EP-A- 0 122 054
- WO-A-84/01917
- DE-A- 3 713 740
- DE-U- 8 623 049
- DE-U- 9 014 430
- DE-U- 9 111 249
- FR-A- 2 621 678
- US-A- 1 928 063

## Beschreibung

Die Erfindung betrifft eine Trennvorrichtung für Autosicherheitsgurte od.dgl. mit einem mindestens eine Messerklinge in einem Schneidenschlitz aufnehmenden und eine Hammerspitze sowie einen Handgriff aufweisenden Werkzeug, welches von Hand lösbar in mehreren blattfederartigen Rastvorsprüngen einer Halterung mit einer die Hammerspitze abdeckenden Schutzlasche aufgenommen ist, und wobei der Handgriff am Boden der Halterung flach anliegt.

Eine Trennvorrichtung dieser Art ist aus der EP-B1-0 125 262 und dem inhaltsgleichen Gebrauchsmuster DE-U-82 32 386 bekannt. Das Werkzeug dieser Trennvorrichtung weist an einem Ende zwei gegenüberliegende Hammerspitzen auf, die von zwei winkelförmigen Schutzlaschen abgedeckt sind, sowie am anderen Ende eine Messerklinge auf, deren Schneidenschlitz in Richtung auf die Hammerspitzen geöffnet ist. Diese Trennvorrichtung ist mit dem Nachteil behaftet, daß der zwischen den beiden Enden befindliche sowie die Halterung großflächig kontaktierende Handgriff entgegen der Kraft von insgesamt vier blattfederartigen Rastvorsprüngen aus der Halterung gelöst werden muß, was sich zu einer kniffeligen Arbeit gestalten kann. Denn ein derartiges Werkzeug wird gerade in Notsituationen benötigt, in denen die Aufmerksamkeit und Konzentration des Benutzers durch die Eilbedürftigkeit der Umstände erheblich beeinträchtigt sind. Da üblicherweise ein Mensch ein Werkzeug am Handgriff zu ergreifen sucht, wird dies auch in dieser Situation erfolgen. Dem stehen jedoch einerseits die flache Anlage des Handgriffteiles an der Kontaktfläche der Halterung und andererseits die Klemmkräfte von insgesamt vier Rastvorsprüngen entgegen. Die Entfernung dieses Werkzeugs aus der Halterung wird darüber hinaus noch durch den relativ kurzen Hebelarm des Handgriffes in Bezug auf die Rastvorsprünge erschwert. Aus all diesen Gründen dürfte sich bei der bekannten Trennvorrichtung das Werkzeug bei einem Ergreifen bzw. Untergreifen an einem seiner Enden leichter aus der Halterung herauslösen lassen als bei einem Ergreifen am Handgriff. Einem solchen ergonomisch günstigen Ergreifen dürfte jedoch die Aufgeregtheit des Benutzers in der Notsituation ebenso wie die optische Ausbildung des Handgriffteiles entgegenwirken.

Ferner ist aus dem DE-U-86 23 049 eine Trennvorrichtung mit einem Werkzeug bekannt, bei welchem sich die Hammerspitze und die Messerklinge an einem vom Handgriff abgewandten Werkzeugende gegenüberliegen. Hierbei ist das offene Ende des Schneidenschlitzes für einen ziehenden Schnitt zum Handgriff hin geöffnet. Die Halterung des bekannten Werkzeuges besteht aus einem taschenartigen, U-förmigen Formteil. Zu seiner Befestigung an einer Haltefläche im Fahrzeug weist das Formteil einen schmalen stegartigen Boden auf, von dem zur Bildung einer taschen- bzw. schlitzartigen Aufnahme zwei Seitenwände orthogonal vorragen, die insgesamt eigenfedernd ausgebildet sind und die zwei diametral gegenüberliegend angeordnete, nach innen vorragende, warzenartige Vorsprünge aufweisen. Das in der taschen- bzw. schlitzartigen Aufnahme angeordnete Werkzeug ist mit seiner einen Schmalseite dem stegartigen Boden zugewandt, welcher zur Aufnahme der Hammerspitze eine kegelförmige Mulde bildet. Die beiden warzenartigen Vorsprünge greifen jeweils in eine an jeder Breitseite des Haltegriffs angebrachte Griffmulde ein. An seinem der kegelförmigen Mulde abgewandten Ende springt vom bodenartigen Steg außerdem ein Anschlagsteg vor, welcher die der Halterung zugewandte Schmalseite des Haltegriffs unterstützt.

Das freie Ende des Haltegriffs ragt bei der Trennvorrichtung gemäß dem DE-U-86 23 049 zwar einseitig frei über die Halterung hinaus und ist deshalb gut ergreifbar, jedoch wird die auf blattfederartige Rastvorsprünge verzichtende bekannte Trennvorrichtung als nachteilig empfunden, weil sie bei einer festen Anbringung an einer Haltefläche des Fahrzeugs, in störender Weise ein Hindernis bildend, zu hoch aufbaut.

Ausgehend von der eingangs beschriebenen bekannten Trennvorrichtung gemäß der EP-B1-0 125 262, bei welcher der Haltegriff des Werkzeuges am Boden der Haltevorrichtung flach anliegt, so daß sich ein vorteilhafter flacher Aufbau der Gesamtanordnung ergibt, besteht die Aufgabe der Erfindung darin, die gattungsgemäße Trennvorrichtung so zu verbessern, daß diese sich auch in Notsituationen rasch und relativ leicht durch ein Ergreifen am Handgriff aus der Halterung lösen läßt und dennoch ein ungewolltes Lösen, beispielsweise durch Erschütterungen, sicher unterbindet.

Diese Aufgabe wird in Verbindung mit dem eingangs genannten Gattungsbegriff durch folgende Merkmale gelöst:
a) die Hammerspitze und die Messerklinge liegen an einem vom Handgriff abgewandten Werkzeugende gegenüber, und das offene Ende des Schneidenschlitzes ist für einen ziehenden Schnitt zum Handgriff hin geöffnet, was an sich bekannt ist,
b) die Schutzlasche für die Hammerspitze sowie zwei Rastvorsprünge sind an den Ecken eines Dreiecks angeordnet,
c) die Schutzlasche ist als Widerlager zu den Rastvorsprüngen ausgebildet und
d) der Handgriff ragt mit mindestens 1/3 der Gesamtlänge des Werkzeugs über den Durchtrittsbereich der Halterung hinaus.

Durch diese Anordnung wird eine Trennvorrichtung geschaffen, deren Werkzeug durch Ergreifen des Handgriffes rasch aus der Halterung gelöst werden kann. Da gemäß dem Merkmal d) der Handgriff mit mindestens 1/3 der Gesamtlänge des Werkzeugs über die Anlagefläche der Halterung hinausragt, kann er nicht nur ergriffen, sondern auch untergriffen werden, was ergonomisch besonders günstig ist. Durch die Merkmale c) und b) kann einerseits das Werkzeug infolge des langen Hebelarmes aus den beiden Rastvorsprüngen und der als Widerlager wirkenden Schutzlasche leicht herausgehebelt und andererseits jedoch auch sicher gehalten werden, da innerhalb der dreieckförmigen Anordnung der beiden Rastvorsprünge und der Schutzlasche das Werkzeug form- und kraftschlüssig gehalten wird. In der Kombination ist zwar das Merkmal a) aus dem DE-U-85 01 027 bekannt, bewirkt jedoch im Gegensatz zu der gattungsgemäßen Trennvorrichtung nach der EP-B1-0 125 262 durch die gegenüberliegende Anordnung von Hammerspitze und Messerklinge einen langen Hebelarm des Werkzeugs zur Heraushebelung aus der Halterung.

Nach einer vorteilhaften Weiterbildung der Erfindung ragt die Hammerspitze mit einem kreiszylindrischen und einem spitzkegeligen Teil aus der Außenkonfiguration des Werkzeugs heraus und ist von der in der Ansicht U-förmig ausgebildeten Schutzlasche eingefaßt. Dadurch wird das Werkzeug einerseits formschlüssig entlang einer relativ großen Fläche gehaltert, und andererseits dient der kreiszylindrische Teil der Hammerspitze als Gleitrollager zum leichten Einsetzen und Heraushebeln des Werkzeugs aus der Halterung.

Vorteilhaft umrahmt die Halterung das Werkzeug bis auf dessen Durchtrittsbereich zum Handgriff mit einem erhabenen Rand, wodurch es in einem relativ großen Rand-Flächenbereich formschlüssig, verwackelungsfrei gehaltert und dennoch leicht aus dieser Halterung gelöst werden kann.

Nach einer besonders vorteilhaften Weiterbildung der Erfindung sind beide blattfederartigen RastvorSprünge mit einer den oberen Rand des ansonsten freiliegenden Werkzeugs übergreifenden Rastnase versehen, von denen der dem Handgriff nächstgelegene Rastvorsprung eine weichere und der entfernter gelegene eine härtere Federkonstante aufweist. Dadurch wird ein zur Hebelarmlänge proportionaler Kraftschluß der Rastvorsprünge gewährleistet, wobei die Federkraft der Rastvorsprünge mit größer werdendem Abstand vom Handgriff ansteigt, hingegen zum Handgriff hin abfällt. Zur Erfüllung dieses Zweckes ist der Rastvorsprung mit der weicheren Federkonstante vorteilhaft bei gleicher Materialdicke und Federlänge schmaler als der Rastvorsprung mit der härteren Federkonstante ausgebildet. Ferner sind beide Rastvorsprünge stoffschlüssig mit der Halterung verbunden.

Um beim Einsatz und Herauslösen des Werkzeuges aus der Halterung das Zusammenspiel des Dreiecks zwischen den beiden Rastvorsprüngen und der Schutzlasche besonders günstig zu gestalten, steht die U-förmig ausgebildete Schutzlasche über den erhabenen Rand der Halterung vor, jedoch weist sie eine geringere Höhe als die Rastvorsprünge mit ihren Rastnasen auf. Dadurch kann beim Einsetzen des Werkzeuges in der Halterung dieses zunächst mit ihren entsprechenden Kontaktflächen an die Rastvorsprünge angelegt werden, bevor es mit der Hammerspitze und dessen gleitlagerartigem, kreiszylindrischen Teil über den nächstgelegenen Rand der Schutzlasche in diese eingeklipst werden kann.

Ein Ausführungsbeispiel der Erfindung ist in den Zeichnungen dargestellt. Dabei zeigen:
Fig. 1 die Ansicht der Trennvorrichtung mit dem in der Halterung form- und kraftschlüssig eingesetzten Werkzeug,
Fig. 2 die Seitenansicht von Fig. 1 in Richtung des Pfeiles II,
Fig. 3 die Ansicht von Fig. 1 beim Herauslösen des Werkzeuges aus der Halterung,
Fig. 4 die Ansicht der Halterung der Fig. 1 bis 3,
Fig. 5 eine Schnittansicht V/V von Fig. 4 durch den Rastvorsprung mit der weicheren Federkonstante,
Fig. 6 eine Schnittansicht entlang der Linie VI/VI von Fig. 4 durch den Rastvorsprung mit der härteren Federkonstante.

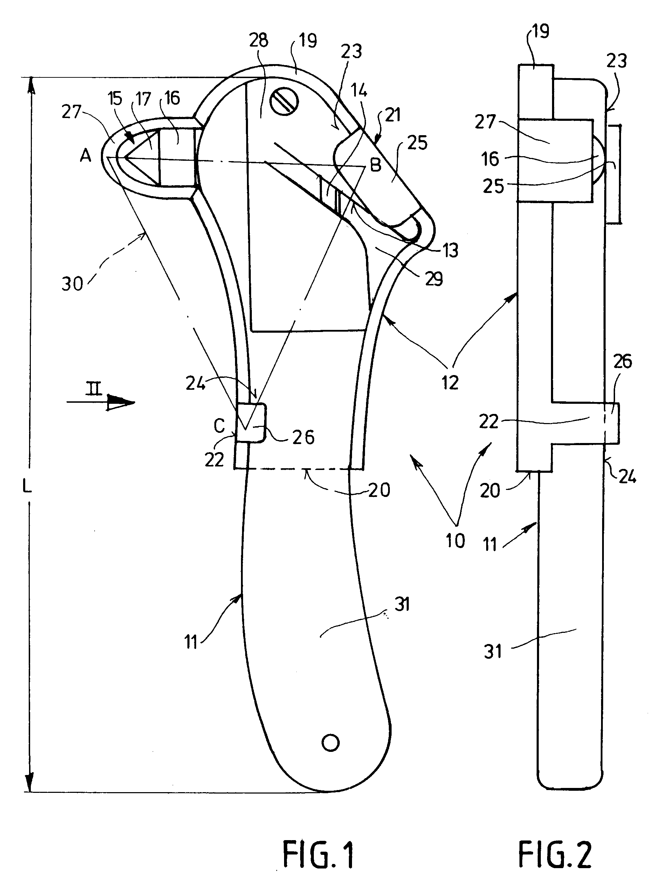

Die Trennvorrichtung 10 gemäß den Fig. 1 bis 3 besteht aus einem Werkzeug 11, welches form- und kraftschlüssig in einer Halterung 12 von Hand lösbar gehaltert ist. Das Werkzeug 11 weist in einem Schneidenschlitz 13 eine Messerklinge 14 sowie gegenüberliegend, eine Hammerspitze 15 auf, die von einem kreiszylindrischen Teil 16 und einem spitzkegeligen Teil 17 gebildet wird.

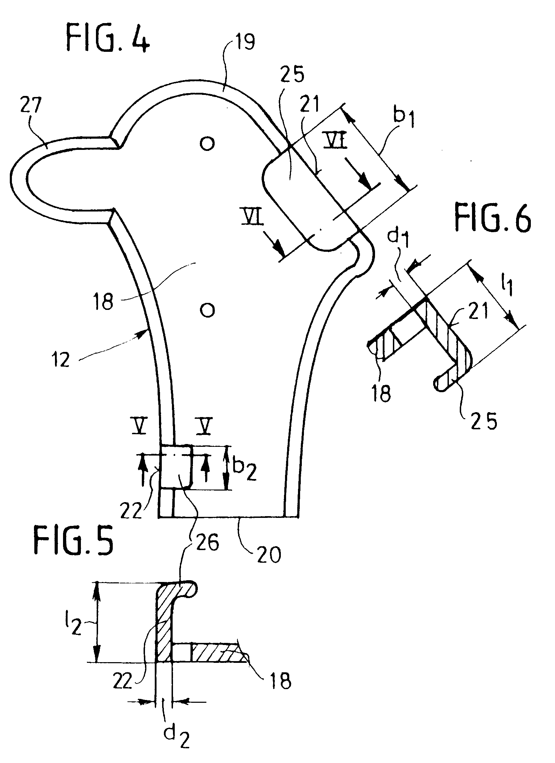

Die Halterung 12 besteht gemäß Fig. 4 aus einem Bodenteil 18 und einem umlaufenden, erhabenen Rand 19, der lediglich im Durchtrittsbereich 20 für den Handgriff 31 des Werkzeuges 11 entfällt. Außerdem ist die Halterung 12 mit zwei blattfederartigen Rastvorsprüngen 21, 22 versehen, die jeweils mit einer den oberen Rand 23, 24 (s. Fig. 1) des ansonsten freiliegenden Werkzeuges 11 übergreifenden Rastnase 25, 26 versehen sind, von denen der dem Handgriff 31 nächstgelegene Rastvorsprung 22 eine weichere und der entfernter gelegene Rastvorsprung 21 eine härtere Federkonstante aufweisen. Im Ausführungsbeispiel der Fig. 1 bis 3 wird diese Federkonstante bei gleicher Materialdicke d₁ und d₂ und gleicher Federlänge l₁ und l₂ gemäß den Fig. 5 und 6 durch eine unterschiedliche Breite b₁ und b₂ gemäß Fig. 4 bestimmt.

Es versteht sich jedoch, daß eine unterschiedliche Federkonstante auch durch eine unterschiedliche Gestaltung der Dicke d₁ und d₂ sowie der Länge l₁ und l₂ der Rastvorsprünge 21 und 22 bewerkstelligt werden kann.

Ferner weist die Halterung 12 noch eine in der Ansicht U-förmige Schutzlasche 27 auf, welche die Hammerspitze 15 abdeckt. Gemäß Fig. 2 steht diese Schutzlasche 27 zwar über den erhabenen Rand 19 der Halterung 12 vor, weist jedoch eine geringere Höhe als die Längen l₁ und l₂ der blattfederartigen Rastvorsprünge 21 und 22 auf. Erfindungsgemäß liegen die Hammerspitze 15 und die Messerklinge 14 an einem vom Handgriff 31 abgewandten Werkzeugende 28 gegenüber, wobei das offene Ende 29 des Schneidenschlitzes 13 für einen ziehenden Schnitt zum Handgriff 31 hin geöffnet ist.

Danach sind erfindungsgemäß die Schutzlasche 27 für die Hammerspitze 15 sowie die beiden Rastvorsprünge 21, 22 an den Ecken A, B und C eines strichpunktiert in Fig. 1 einskizzierten Dreiecks 30 angeordnet, wobei die Schutzlasche 27 als Widerlager zu den Rastvorsprüngen 21, 22 ausgebildet ist.

Schließlich ragt erfindungsgemäß der Handgriff 31 mit mindestens 1/3 der Gesamtlänge L des Werkzeuges 11 über den Durchtrittsbereich 20 der Halterung 12 hinaus. Durch diese Anordnung wird das Werkzeug 11 in der Halterung 12 form- und/oder kraftschlüssig sicher gehaltert und kann daraus auch nicht durch Erschütterungen gelöst werden, da die Lasche 27 am Dreieckpunkt A gegenüber den blattfederartigen Rastvorsprüngen 21, 22 an den Dreieckspunkten B und C als Widerlager dient.

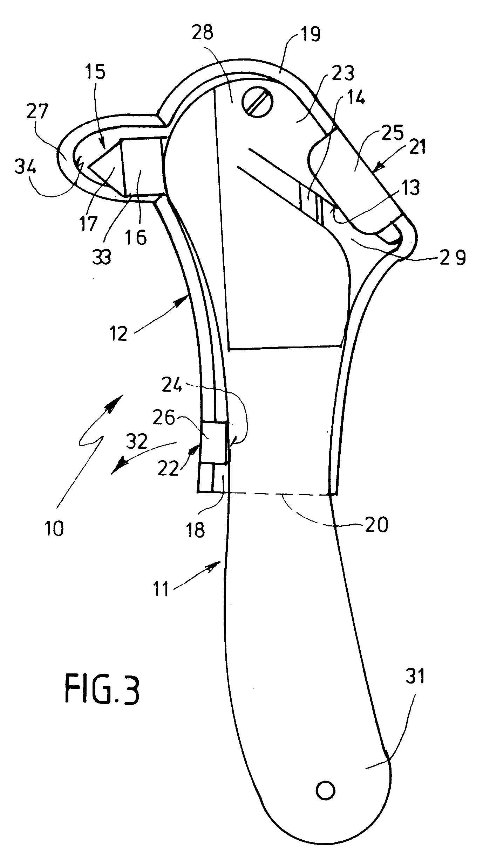

Zum Herauslösen des Werkzeuges 11 aus der Halterung 12 wird gemäß Fig. 3 der Handgriff 31 von den Fingern einer Hand ergriffen, wobei er auch, je nach der Dicke der Halterung 12 (s. Fig. 2), untergriffen werden kann, da er mit mindestens 1/3 der Gesamtlänge L des Werkzeuges 11 über den Durchtrittsbereich 20 der Halterung 12 hinausragt. Dabei kann dieser Aushebelungsvorgang noch dadurch unterstützt werden, daß beispielsweise ein Rechtshänder mit den vier Fingern und dem Daumenballen seiner rechten Hand den Handgriff 31 ergreift und zugleich mit dem Daumen den Rastvorsprung 22 mit der Rastnase 26 in Richtung des Pfeiles 32 drückt. Es ist jedoch auch möglich, das Werkzeug 11 einfach mit dem Daumen und den Fingern einer Hand zu ergreifen und durch Hochziehen aus der Zeichenebene aus den Rastvorsprüngen 21 und 22 herauszuhebeln. Bei diesem Heraushebelungsvorgang wird zunächst die Federkraft des Rastvorsprunges 22 mit der weicheren Federkonstante überwunden, sodann erst mit dem entsprechend längeren Hebelarm die Klemmkräfte des weiter entfernten, jedoch mit der härteren Federkonstante versehenen Rastvorsprunges 21. Dabei gleitet das kreiszylindrische Teil 16 der Hammerspitze 15 mit seinem unteren Bereich 33 über die angrenzende Kante 34 der U-förmigen Schutzlasche 27.

Zum Einsetzen des Werkzeuges 11 wird dieses entsprechend Fig. 3 zunächst mit seinem oberen Rand 23 im Bereich des Schneidenschlitzes 13 unter die Rastnase 25 des Rastvorsprunges 21 geschoben und sodann durch Niederdrücken mit dem Daumen in Höhe des zweiten Rastvorsprunges 22 gegen den Boden 18 der Halterung 12 gedrückt, bis gleichzeitig der untere Bereich 33 des kreiszylindrischen Teiles 16 der Hammerspitze 15 über die Kante 34 der Schutzlasche 27 hinweggleitet und der Rastvorsprung 22 mit seiner Rastnase 26 über den oberen Rand 24 in diesem Bereich des Werkzeuges 11 hinweg in die Halterungslage federnd einschnappt. Aufgrund der Dreipunkthalterung A, B, C, von denen die Schutzlasche 27 formschlüssig und die Rastvorsprünge 21, 22 form- und kraftschlüssig wirken, wird das Werkzeug 11 sicher und störungsfrei in der Halterung 12 gehalten.

## Patentansprüche

1. Trennvorrichtung (10) für Autosicherheitsgurte od.dgl. mit einem mindestens eine Messerklinge (14) in einem Schneidenschlitz (13) aufnehmenden, eine Hammerspitze (15) sowie einen Handgriff (31) aufweisenden Werkzeug (11), welches von Hand lösbar in mehreren blattfederartigen Rastvorsprüngen (21,22) einer Halterung (12) mit einer die Hammerspitze abdeckenden Schutzlasche (27) aufgenommen ist, und wobei der Handgriff (31) am Boden (18) der Halterung (12) flach anliegt, gekennzeichnet durch folgende Merkmale:
a) die Hammerspitze (15) und die Messerklinge (14) liegen an einem vom Handgriff (31) abgewandten Werkzeugende (28) gegenüber, und das offene Ende (29) des Schneidenschlitzes (13) ist für einen ziehenden Schnitt zum Handgriff (31) hin geöffnet, was an sich bekannt ist,
b) die Schutzlasche (27) für die Hammerspitze (15) sowie zwei Rastvorsprünge (21, 22) sind an den Ecken (A, B, C) eines Dreiecks (30) angeordnet,
c) die Schutzlasche (27) ist als Widerlager zu den Rastvorsprüngen (21, 22) ausgebildet und
d) der Handgriff (31) ragt mit mindestens 1/3 der Gesamtlänge (L) des Werkzeugs (11) über den Durchtrittsbereich (20) der Halterung (12) hinaus.

2. Trennvorrichtung nach Anspruch 1, dadurch gekennzeichnet, daß die Hammerspitze (15) mit einem kreiszylindrischen (16) und einem spitzkegeligen Teil (17) aus der Außenkonfiguration des Werkzeugs (11) herausragt und von der in der Ansicht U-förmig ausgebildeten Schutzlasche (27) eingefaßt ist.

3. Trennvorrichtung nach Anspruch 1 oder 2, dadurch gekennzeichnet, daß die Halterung (12) das Werkzeug (11) bis auf dessen Durchtrittsbereich (20) zum Handgriff (31) mit einem erhabenen Rand (19) umrahmt.

4. Trennvorrichtung nach einem der Ansprüche 1 bis 3, dadurch gekennzeichnet, daß beide blattfederartigen Rastvorsprünge (21, 22) mit einer den oberen Rand (23, 24) des ansonsten freiliegenden Werkzeugs (11) übergreifenden Rastnase (25, 26) versehen sind, von denen der dem Handgriff (31) nächstgelegene Rastvorsprung (22) eine weichere und der entfernter gelegene (21) eine härtere Federkonstante aufweist.

5. Trennvorrichtung nach Anspruch 4, dadurch gekennzeichnet, daß der Rastvorsprung (22) mit der weicheren Federkonstante bei gleicher Materialdicke (d₁, d₂) und Federlänge (l₁, l₂) mit einer geringeren Breite (b₂) als der Rastvorsprung (21) mit der härteren Federkonstante versehen ist.

6. Trennvorrichtung nach einem der Ansprüche 1 bis 5, dadurch gekennzeichnet, daß beide Rastvorsprünge (21, 22) stoffschlüssig mit der Halterung (12) verbunden sind.

7. Trennvorrichtung nach einem der Ansprüche 3 bis 6, dadurch gekennzeichnet, daß die U-förmig ausgebildete Schutzlasche (27) über den erhabenen Rand (19) der Halterung (12) vorsteht, jedoch eine geringere Höhe als die Rastvorsprünge (21, 22) mit ihren Rastnasen (25, 26) aufweist.

8. Trennvorrichtung nach einem der Ansprüche 1 bis 7, dadurch gekennzeichnet, daß die Halterung (12) in an sich bekannter Weise als Spritzgußteil aus Kunststoff hergestellt ist.

## Claims

1. Separating device (10) for car seat belts or similar, with a tool (11), holding one or more knife blades (14) in a cutting slot (13) and having a hammer point (15) and a handle (31), which is mounted so as to be capable of manual release in several leaf-spring type snap-in projections (21, 22) of a holder (12) which has a protective cover piece (27) covering the hammer point, and in which the handle (31) lies flat on the base (18) of the holder (12), characterized in that:
a) The hammer point (15) and the knife blade (14) are located on the end (28) of the tool opposite to the handle (31) and the open end (29) of the cutting slot (13) is open towards the handle (31) for the purpose of making a drawn cut, as known in the art.
b) The protective cover piece (27) for the hammer point (15) and two snap-in projections (21, 22) are disposed at the corners (A, B, C) of a triangle (30).
c) The protective cover piece (27) acts as a counter bearing to the snap-in projections (21, 22).
d) The handle (31) projects beyond the through-passage (20) of the holder (12) by at least 1/3 of the total length (L) of the tool (11).

2. Separating device according to Claim 1, characterized in that a circular cylindrical part (16) and a pointed cone part (17) of the hammer point (15) project beyond the outer contour of the tool (11), the hammer point being set within the protective cover piece (27) which is U-shaped in the plane of projection.

3. Separating device according to either of Claims 1 or 2, characterized in that the holder (12) possesses a raised edge (19) which passes around the cool (11) with the exception of its through-passage (20) for the handle (31).

4. Separating device according to any one of Claims 1 to 3, characterized in that both leaf-spring type snap-in projections (21, 22) possess a snap-in lip (25, 26) which overlaps the top edge (23, 24) of the otherwise uncovered tool (11), the snap-in projection (22) nearest the handle (31) having a softer spring constant and the snap-in projection (21) farthest from the handle having a harder spring constant.

5. Separating device according to Claim 4, characterized in that the width (b₂) of the snap-in projection (22) with the softer spring constant is less than that of the snap-in projection (21), having the same thickness of material (d₁, d₂) and spring length (l₁, l₂).

6. Separating device according to any one of Claims 1 to 5, characterized in that both snap-in projections (21, 22) are integrally joined to the holder (12).

7. Separating device according to any one of Claims 3 to 6, characterized in that the U-shaped protective cover piece (27) projects beyond the raised edge (19) of the holder (12) while being of a lesser height than the snap-in lips (25, 26) of the snap-in projections (21, 22).

8. Separating device according to any one of Claims 1 to 7, characterized in that the holder (12) is produced in the known manner from a plastics material as an injection moulded part.

## Revendications

1. Dispositif de séparation (10), pour des ceintures de sécurité pour automobiles ou analogues, avec un outil (11) recevant au moins une lame de coupe (14), dans une fente de découpage (13), présentant une pointe de marteau (15) ainsi qu'une poignée (31), l'outil (11) étant porté à la main, monté de façon désolidarisable dans plusieurs saillies d'encliquetage (21, 22), se présentant sous forme de ressorts à lame de coupes, d'une fixation (12), avec une patte de protection (27) recouvrant la pointe de marteau et la poignée (31) appuyant à plat sur le fond (18) de la fixation (12), caractérisé par les propriétés ci-après :
a) la pointe de marteau (15) et la lame de coupe (14) sont situées à l'opposé l'une de l'autre, sur une extrémité d'outil (28) opposée à la poignée (31), et l'extrémité ouverte (29) de la fente de découpe (13) étant ouverte en direction de la poignée (31) pour effectuer une entaille, sous un effet de traction, ce qui est connu en soi,
b) la patte de protection (27) destinée à la pointe de marteau (15), ainsi que deux saillies d'encliquetage (21, 22), sont disposées aux sommets (A, B, C) d'un triangle (30),
c) la patte de protection (27) est réalisée sous forme de contre-appui pour les saillies d'encliquetage (21, 22), et
d) la poignée (31) sort, par au moins un tiers de la longueur totale (L) de l'outil (11), de la zone de passage (20) de la fixation (12).

2. Dispositif de séparation selon la revendication 1, caractérisé en ce que la pointe de marteau (15) sort, par une partie cylindrique circulaire (16) et une partie à cône pointu (17), hors de la forme extérieure de l'outil (11) et est enchâssée par la patte de protection (27) à forme en U lorsqu'il est vu en élévation.

3. Dispositif de séparation selon la revendication 1 ou 2, caractérisé en ce que la fixation (12) encadre par une bordure (19) en relief l'outil (11), jusqu'à sa zone de passage (20) concernant la poignée (31).

4. Dispositif de séparation selon l'une des revendications 1 à 3,
caractérisé en ce que les deux saillies d'encliquetage (21, 22) réalisées sous forme de ressorts à lame sont pourvues d'un ergot d'encliquetage (25, 26) saisissant par le dessus le bord supérieur (23, 24) de l'outil (11) qui, pour le reste, est dégagé, saillies d'encliquetage dont celle (22) qui est située le plus près de la poignée (31) présente une constante élastique plus molle et dont celle (21) en étant plus éloignée présente une constance d'élasticité plus dure.

5. Dispositif de séparation selon la revendication 4, caractérisé en ce que la saillie d'encliquetage (22) qui est pourvue de la constance d'élasticité la plus souple, son épaisseur de matériau (D₁, D₂) et sa longueur élastique (l₁, l₂) étant identiques, est de une largeur (b₂) moindre que la saillie d'encliquetage (21) présentant la constance d'élasticité la plus dure.

6. Dispositif de séparation selon l'une des revendications 1 à 5, caractérisé en ce que les deux saillies d'encliquetage (21, 22) sont reliées par la matière à la fixation (12).

7. Dispositif de séparation selon l'une des revendications 3 à 6, caractérisé en ce que la patte de protection (27) en U fait saillie sur le bord (19) en relief de la fixation (12), en présentant cependant une hauteur moindre q²ue celle des saillies d'encliquetage (21, 22) par ses ergots d'encliquetage (25, 26).

8. Dispositif de séparation selon l'une des revendications 1 à 7, caractérisé en ce que la fixation (12) est fabriquée, de manière connue en soi, sous forme de pièce moulée par injection, en matière plastique.
